# EUROPEAN PATENT APPLICATION

(11) **EP 2 204 973 A2**
(43) Date of publication of application: **07.07.2010**
(21) Application number: 10150048.6
(22) Date of filing: 04.01.2010
(51) Int. Cl.: H04M 1/27, H04M 1/725

(54) **Mobile terminal and method for providing application program thereof**

(30) Priority: 05.01.2009 KR 20090000409
(71) Applicant: SAMSUNG ELECTRONICS CO., LTD., Suwon-si, Gyeonggi-do (KR)
(72) Inventor: Kim, Jin Yong, Gyeonggi-do (KR); Hwang, Jae Joon, Gyeonggi-do (KR); Shin, Dong Jun, Gyeonggi-do (KR); Shin, Young Sun, Gyeonggi-do (KR)
(74) Representative: Boakes, Jason Carrington

(57) **Abstract**

A mobile terminal and a method for providing an application program is provided. The method for providing an application program of a mobile terminal includes receiving an input sound signal, determining whether at least one predetermined keyword exists in the input sound signal, determining, if at least one predetermined keyword is determined to exist in the input sound signal, at least one application program mapped with the keyword may be displayed in response to detection of the input of the sound signal that is terminated. And a word corresponding to the keyword and at least one application program mapped with the keyword may be displayed.

## Description

### BACKGROUND OF THE INVENTION

### FIELD OF THE INVENTION

Exemplary embodiments of the present invention relate to a mobile terminal and a method for providing an application program thereof, and more particularly, to a mobile terminal and a method for providing an application program thereof that analyze a sound signal input to the mobile terminal and provide an application program in an icon or list form after the input of the sound signal is terminated.

### DISCUSSION OF THE BACKGROUND

Due to technology development, various functions have been added to mobile terminals. Such functions include, for example, a Moving Picture Experts Group Audio Layer 3 (MP3) function, mobile broadcasting reception function, moving picture reproduction function, photographing function, voice recognition function, schedule management function, and alarm function.

After performing communication with another party, a user may record an appointment or a schedule. In some examples, after communication is terminated, the user may execute a memo function, an alarm function, and a schedule management function of a mobile terminal and store an appointment location and time. For this, the user may search for and execute an application program to execute from a menu of the mobile terminal. However, as described above, because the mobile terminal may include numerous functions, it may be difficult for the user to find the application program he wishes to execute. Accordingly, the user may not use various functions of the mobile terminal that have been provided for user convenience. Therefore, a method of executing an application program using a voice recognition function may be provided. However, in a conventional method of executing an application program using a voice recognition function, a plurality of complicated steps including executing a voice recognition mode and inputting a sound signal may be required. Further, when the user is unfamiliar with a function of the mobile terminal, the user may not be able to use the voice recognition function properly.

### SUMMARY OF THE INVENTION

Exemplary embodiments of the present invention provide a mobile terminal and a method for providing an application program thereof that analyzes a sound signal input to the mobile terminal and provides application programs in which a user frequently uses in an icon or list form rendered after the input of the sound signal is terminated, thereby enhancing user convenience.

Additional features of the invention will be set forth in the description which follows, and in part will be apparent from the description, or may be learned by practice of the invention.

Exemplary embodiments of the present invention disclose a method for providing an application program of a mobile terminal. The method includes receiving an input sound signal. The method also includes determining whether at least one predetermined keyword exists in the input sound signal. The method includes determining at least one application program mapped with the keyword. The method includes displaying, in response to detection of the sound signal that is terminated, a word corresponding to the keyword and at least one application program mapped with the keyword.

Exemplary embodiments of the present invention disclose a method for providing an application program of a mobile terminal. The method includes receiving an input sound signal. The method also includes converting the input sound signal to character information. The method includes extracting a keyword from the character information. The method also includes determining whether an application program mapped with the keyword. The method includes displaying, in response to detection of the input of the sound signal that is terminated, a word corresponding to the keyword and the application program mapped with the keyword.

Exemplary embodiments of the present invention also disclose a terminal configured to provide an application program. The terminal includes a controller configured to extract, in response to detection of an input sound signal, a predetermined keyword from the input sound signal and to determine at least one application program mapped with the keyword. The terminal also includes a display unit configured to display, in response to detection of the input sound signal that is terminated, a word corresponding to the keyword and to display at least one application program mapped with the keyword

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate exemplary embodiments of the invention, and together with the description serve to explain the principles of the invention.

FIG. 1 is an exemplary block diagram illustrating a hardware of a mobile terminal that can be used to implement various embodiments according to exemplary embodiments of the present invention.

FIG. 2A, FIG. 2B, and FIG. 2C illustrate examples of screen views of a mobile terminal according to exemplary embodiments of the present invention.

FIG. 3 is a flowchart of a process for illustrating a method for providing an application program of a mobile terminal according to exemplary embodiments of the present invention.

### DETAILED DESCRIPTION OF THE ILLUSTRATED EMBODIMENTS

The invention is described more fully hereinafter with reference to the accompanying drawings, in which exemplary embodiments of the invention are shown. This invention may, however, be embodied in many different forms and should not be construed as limited to the embodiments set forth herein. Rather, these exemplary embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

While the present invention may be embodied in many different forms, specific exemplary embodiments of the present invention are shown in drawings and are described herein in detail, with the understanding that the present disclosure is to be considered as an exemplification of the principles of the invention and is not intended to limit the invention to the specific exemplary embodiments illustrated.

In the following description, a "keyword" is information included in a sound signal input to a mobile terminal. Such information may be used to provided the application program after the input of the sound signal is terminated. For example, when a sound signal including a specific keyword is input while performing communication, a mobile terminal may provide an application program mapped with the keyword after communication is terminated.

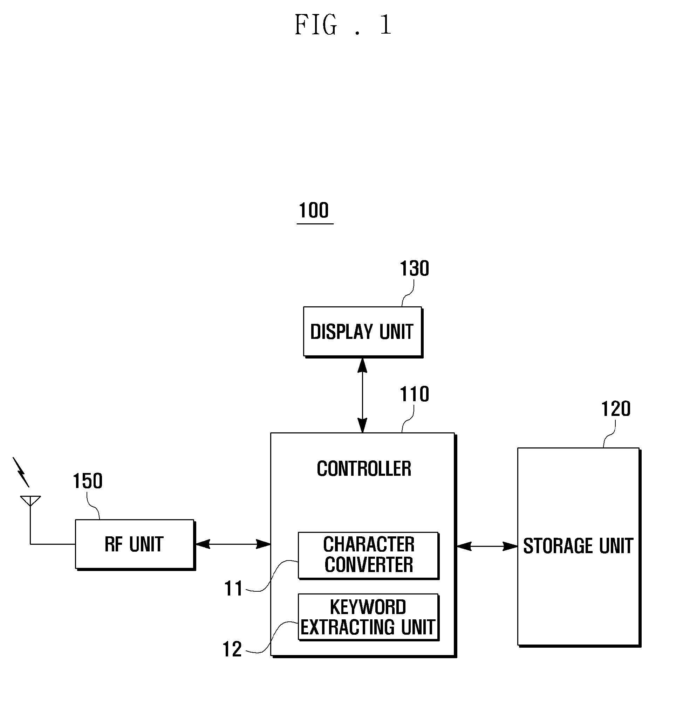

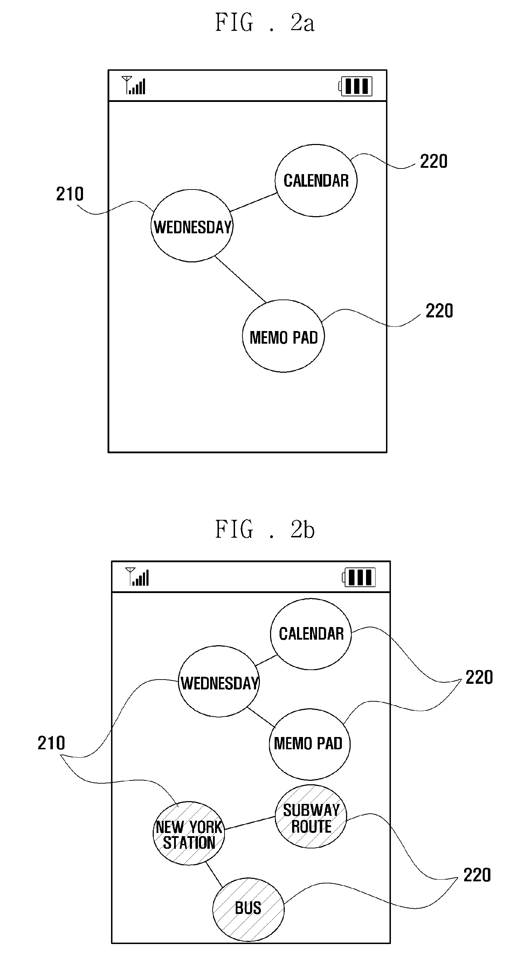

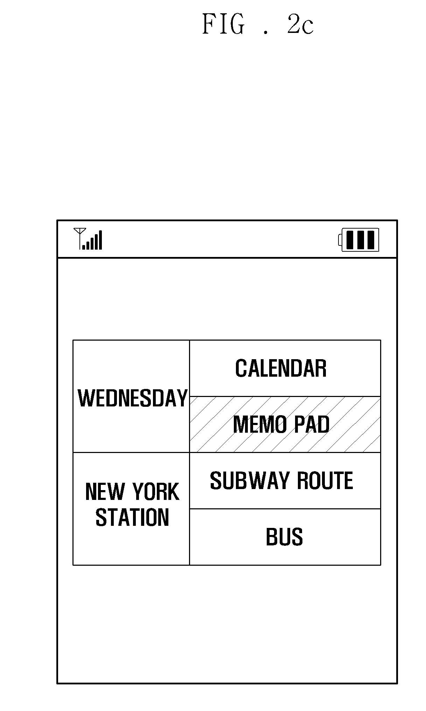

FIG. 1 is an exemplary block diagram illustrating a hardware of a mobile terminal 100 that can be used to implement various embodiments according to exemplary embodiments of the present invention. And FIG. 2A, FIG. 2B, and FIG. 2C illustrate examples of screen views of a mobile terminal 100 according to exemplary embodiments of the present invention.

Referring to FIG. 1, FIG. 2A, FIG. 2B, and FIG. 2C, a mobile terminal 100 includes a controller 110, storage unit 120, display unit 130, and radio frequency (RF) unit 150.

The storage unit 120 may store a program configured to perform a function or an operation according to the present exemplary embodiments and the storage unit 120 may store user data. The storage unit 120 may be formed with at least one of a volatile memory element and a non-volatile memory element and may include a program area and a data area.

The program area may store a program configured to control general operations of the mobile terminal 100, an operating system configured to boot the mobile terminal 100, and an application program configured to perform other optional functions of the mobile terminal 100, including, for example, a photographing function, a digital broadcasting reception function, an image or a moving picture reproduction function, a music reproduction function, a memo function, an alarm function, a wireless Internet function, and an e-mail transmission function. In some examples, in the present exemplary embodiments, the program area may include an application program configured to perform a speech to text (STT) function and an application program configured to extract a preset keyword from a sound signal or from character information converted from the sound signal. Further, the storage unit 120 may include an application program configured to search an application program associated with the keyword and to output a keyword and the application program in an icon form or list form to the display unit 130.

The data area may store data generated according to use of the mobile terminal 100 and may store, for example, information corresponding to a phonebook, a subway route, a memo, audio data, related contents, and user data. According to the present exemplary embodiments, the data area may store a mapping table configured to store keywords and application programs associated with the keywords. The data area may store the mapping table in a form similar to TABLE 1.

**[TABLE 1]**

| | |
|---|---|
| Keyword | Application Program |
| Month, Date, Day | Calendar, Memo Pad |
| Phone Number | Phone Book, Communication log |
| Message, Character | Message Writing |
| E-mail | E-mail |
| WWW | Web Browser |
| Stock, Exchange Rate, Fund | Web Browser |
| Report, Homework | Memo Pad |
| Station, Street | Bus, Subway Route |

TABLE 1 is an exemplary mapping table configured to store application programs associated with a keyword according to the present exemplary embodiments.

In TABLE 1, for example, keywords related to a date such as "month", "date", and "day" are associated with an application program such as a "calendar" and a "memo pad", a keyword related to a "phone number" is associated with an application program such as a "phonebook" and a "communication log", and keywords related to a location such as "station" and "street" are associated with an application program such as a "bus" and a "subway route".

The above description of the mapping table is merely exemplary. Table 1 may be stored in various forms, the keywords and an application programs associated with the keywords may be variously set according to a designer's choice by way of configuration or user's intention based on user settings.

The radio frequency (RF) unit 150 is a device configured to provide a wireless communication service such as, for example, data communications, audio dedicated communications, audiovisual communications, and wireless Internet services with other mobile terminals, and the RF unit 150 may form a communication channel with a base station (not shown). For this, the RF unit 150 may include an RF transmitter configured to up-convert a frequency of a signal output from the controller 110, to amplify the signal, and to transmit the signal through an antenna. The RF unit 150 may also include an RF receiver may including a filter to gain low-noise amplifying a wireless signal received through the antenna, to down-convert a frequency of the signal, and to transmit the signal to the controller 110. In some present exemplary embodiments, the RF unit 150 may form a communication channel with an Internet server (not shown) through a base station in order to provide an Internet service, under the control of the controller 110.

In the present exemplary embodiments, in order to use an Internet service, the RF unit 150 may form a communication channel with an Internet server through a base station, however, the present invention is not limited thereto. In some present exemplary embodiments, the mobile terminal 100 may include, for example, a wireless local area network (LAN) in order to form a communication channel with an Internet server without using a base station.

The display unit 130 may display various menu screens of the mobile terminal 100, user data input by a user, function setting information, or other information provided to the user. The display unit 130 may be one of, for example, a liquid crystal display (LCD) and an organic light emitting diode (OLED). Further, when display unit 130 is formed as a touch screen, the display unit 130 may function as an input means. Particularly, in some present exemplary embodiments, when input of a sound signal is terminated (for example, when communication is terminated), the display unit 130 may displays a word (e.g., word file, term file) including a keyword and at least one application program associated with the keyword, under the control of the controller 110. For example, as shown in FIG. 2A, FIG. 2B, and FIG. 2C, the display unit 130 may display a word including the keyword and at least one application program associated with the keyword in an icon or list form. For example, as shown in FIG. 2A, the display unit 130 may display a first icon 210 indicating a word including a keyword at one side of the display unit 130 and second icons 220 indicating an application program associated with the keyword at a periphery of the first icon 210. In this example, the display unit 130 may display the first icon 210 and the second icons 220 may be connected by a connection line. Further, the display unit 130 may display the first icon 210 larger or smaller than, or shaped differently than, the second icons 220. If an application program associated with the keyword exists, after input of a sound signal is terminated, the controller 110 may execute an application program associated with the keyword.

If a plurality of words including a keyword exist, the display unit 130 may display a keyword and an application program associated with the keyword as a group, as exemplarily shown in FIG. 2B. That is, the display unit 130 may display the first icon 210 indicating a word including a keyword in connection with the second icons 220 indicating an application program associated with that keyword. In this example, the display unit 130 may differently display at least a character color and a background color of the first icon 210 and the second icons 220 on a group basis.

The display unit 130 may display a word including a keyword and at least one application program associated with the keyword in a list form, as shown in FIG. 2C, as an example.

The controller 110 may control general operations of the mobile terminal 100 and a signal flow among units of the mobile terminal 100. In some present exemplary embodiments, the controller 110 may determine whether a word including a keyword exists in an input sound signal or in character information converted from the sound signal. For this, the controller 110 may include a character converter 11 and a keyword extracting unit 12.

The character converter 11 may perform a speech to text (STT) function to convert a sound signal to character information, may convert a sound signal input while performing audio dedicated communication or audiovisual communication to character information, and may transmit the character information to the keyword extracting unit 12. In some examples, the character converter 11 may display the converted character information in real time in the display unit 130.

The keyword extracting unit 12 may extract a keyword from a sound signal input while performing audio dedicated communication or audiovisual communication, or may extract a keyword from character information converted from the sound signal. The keyword may be stored in the mapping table, as illustrated in TABLE 1, as an example. The keyword is stored when using a mobile terminal, or may be input by a user and stored.

For example, if a sound signal "Let's meet at New York station on next Wednesday." is input, the character converter 11 may convert the sound signal to character information, and the keyword extracting unit 12 may extract "Wednesday" including a keyword "day" and a word "New York station" including a keyword "station" from the converted character information by referring to TABLE 1. The controller 110 may determine at least one application program associated with words "day" and "station". In this example, an application program associated with "day" may be a "calendar" and a "memo pad," and an application program associated with "station" may be a "subway route" and a "bus". If input of a sound signal is terminated, e.g., if communication is terminated, the controller 110 may set "Wednesday," "calendar," and "memo pad" as a group, may set "New York station," "bus," and "subway route" as a group, and may control the display unit 130 to display the groups in an icon or a list form, for example, as shown in FIG. 2B and FIG. 2C.

When one of the application programs displayed in the icon or list form is selected, the controller 110 may execute the selected application program. When a keyword exists in an input sound signal and an application program associated with the keyword exists, after input of a sound signal is terminated (e.g., after communication is terminated), the controller 110 may immediately execute the application program associated with the keyword. In some examples, when the keyword is related to a schedule such as a date or an appointment, the controller 110 may control the display unit 130 to display a pop-up window asking whether scheduling of an appointment is desired. For example, if a word including a keyword is only "Wednesday," the controller 110 may control the display unit 130 to display a pop-up window requesting, for example, "Would you like to schedule an appointment on Wednesday?". The mobile terminal 100 may remind a user of communication content and the user can easily schedule an appointment without directly executing an appointment scheduling application program.

According to various exemplary embodiments of the invention, execution of the instructions contained in storage unit 120 may cause the processor to perform processes according to the instructions. The control unit 110 may include one or more processors in a multi-processing arrangement to execute the instructions contained in storage unit 120. Hard-wired circuitry may be used in place of, or in combination with, software instructions to implement one or more of the exemplary embodiments of the present invention. For example, reconfigurable hardware, such as Field Programmable Gate Arrays (FPGAs), can be used, and functionality and connection topology of the FPGA logic gates may be customized at run-time, typically by programming memory look up tables. Thus, exemplary embodiments of the present invention are not limited to any specific combination of hardware circuitry and/or software.

The electronic device may also include at least one communication interface unit (e.g., RF unit 150). The communication interface unit may provide a two-way data communication coupling to a network link (not shown). The communication interface unit may send and receive electrical, electromagnetic, or optical signals that can carry digital data streams representing various types of information. Further, the communication interface unit may include peripheral interface devices, such as a Universal Serial Bus (USB) interface, or a PCMCIA (Personal Computer Memory Card International Association) interface.

The processor may execute transmitted code and/or may store the transmitted code in the storage unit 120, or in other non-volatile storage. In some cases, the electronic device may obtain application code in the form of a carrier wave.

A "computer-readable medium" may refer to any medium that provides instructions to the processor for execution. Such a medium may be implemented in various forms, including but not limited to, non-volatile media, volatile media, and transmission media. Non-volatile media may include, for example, optical or magnetic disks, such as the storage device. Volatile media may include dynamic memory, such as main memory. Transmission media may include coaxial cables, copper wire and fiber optics, including the wires that comprise the bus. Transmission media can also take the form of acoustic, optical, or electromagnetic waves, such as those generated during radio frequency (RF) and infrared (IR) data communications. Common forms of computer-readable media include, for example, a floppy disk, a flexible disk, hard disk, magnetic tape, any other suitable magnetic medium, a compact disk read-only memory (CD-ROM), compact disc rewritable (CDRW), digital video disc (DVD), any other suitable optical medium, punch cards, optical mark sheets, any other suitable physical medium with patterns of holes or other optically recognizable indicia, a random-access memory (RAM), a programmable read-only memory (PROM), and erasable programmable read-only memory (EPROM), a FLASH-EPROM, any other memory chip or cartridge, and a carrier wave.

Various forms of computer-readable media may be involved in providing instructions to a processor for execution. For example, the instructions for carrying out at least part of the present invention may be implemented on a magnetic disk of a remote computer. The remote mobile terminal may load the instructions into the storage unit 120 and may send the instructions, for example, over a telephone line using a modem. A modem of a local system may receive the data on a telephone line and/or may be used an infrared transmitter to convert the data to an infrared signal and may transmit the infrared signal to the electronic device. The electronic device may receive information and instructions provided by the infrared signal. The bus may provide the information and instructions to the storage unit 120, from which a processor may retrieve and execute the instructions. The instructions received by storage unit 120 may optionally be stored either before or after execution by the control unit 110.

The mobile terminal 100 may further include constituent elements to implement additional functions, such as, for example, a camera module for an image or video capture, a short range communication module for short range wireless communication, a sound signal output device such as a speaker, a sound signal input device such as a microphone, and a digital sound source reproduction module such as an MP3 module.

In the mobile terminal 100 according to the exemplary embodiments of the present invention having the above-described configuration, by analyzing a sound signal input while performing communication and providing related application programs in a list or icon form after communication is terminated, the mobile terminal can remind a user of information that the user may be apt to forget after performing communication and the user can store the information as needed, thereby improving user convenience.

A method for providing an application program of a mobile terminal 100 according to exemplary embodiments of the present invention will be described hereinafter.

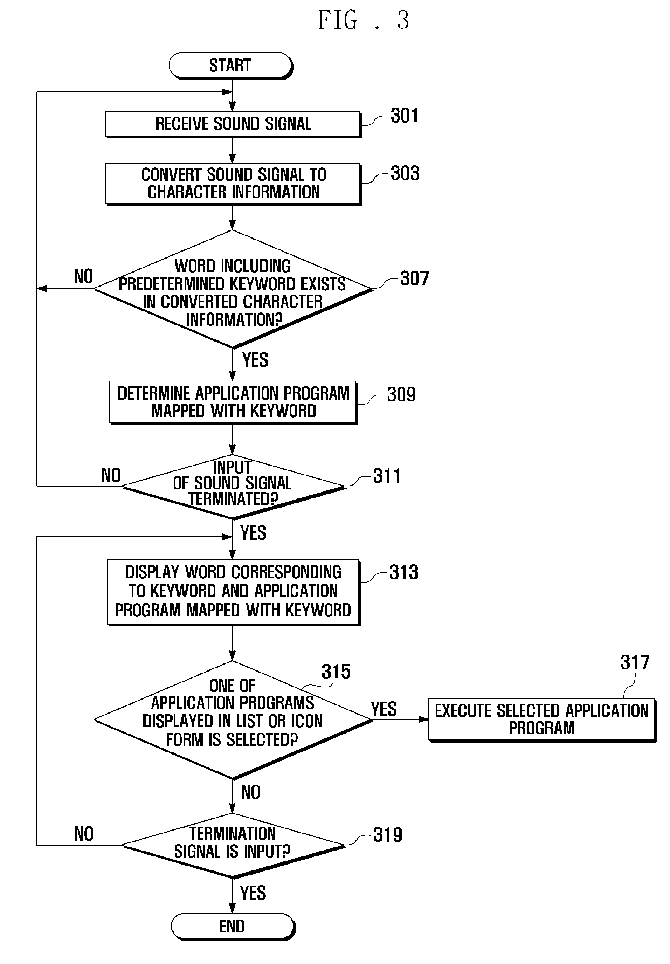

FIG. 3 is a flowchart of a process for illustrating a method for providing an application program of the mobile terminal 100 according to exemplary embodiments of the present invention.

Referring to FIG. 1, FIG. 2A, FIG. 2B, FIG. 2C, and FIG. 3, in step 301, the controller 110 may receive a sound signal. The sound signal may be a sound signal input while performing audio dedicated communication or audiovisual communication. As in step 303, the controller 110 may convert the sound signal to character information. For this, the controller 110 may instruct the character converter 11 to process the conversion.

In step 307, the controller 110 may determine whether a word including a predetermined keyword exists in the converted character information. For this, the controller 110 may instruct the keyword extracting unit 12 to extract the keyword. If a word including a keyword does not exist in the converted character information, the process may return to step 301. If a word including a keyword exists in the converted character information, in step 309, the controller 110 may determine an application program mapped with the keyword. For this, it is preferable that the mobile terminal 100 may implement a mapping table to store a keyword and an application program mapped with the keyword.

In step 311, the controller 110 may determine whether the input of a sound signal is terminated (e.g." termination of communication). If the input of a sound signal is not terminated, the process may return to step 301. If the input of a sound signal is terminated, in step 313, the controller 110 may control the display unit 130 to display a word corresponding to a keyword and an application program mapped with the keyword in a list or icon form, as exemplarily shown in FIG. 2A, FIG. 2B, and FIG. 2C. When one word including the keyword and one application program associated with the keyword exists, the controller 110 may immediately execute the application program associated with the keyword when the input of a sound signal is terminated (e.g., when communication is terminated).

In step 315, the controller 110 may determine whether one of application programs displayed in list or icon form can be selected. If one of the application programs displayed in the list or icon form is selected, per step 317, the controller 110 may execute the selected application program. If one of the application programs displayed in the list or icon form is not selected, per step 319, the controller 110 may determine whether a termination signal is input. If a termination signal is not determined as input, the process may return to step 313. If a termination signal is input, the controller 110 may terminate the process for providing an application program of the mobile terminal 100 according to the exemplary embodiments of the present invention, and the controller 110 may control the display unit 130 to output a standby screen.

For example, if a sound signal such as "Let's meet at New York station on next Wednesday" is determined input while performing audio dedicated communication or audiovisual communication, the controller 110 may convert the sound signal to character information and may extract a word including a keyword by referring to a mapping table such as TABLE 1. In some examples, the extracted word may be "Wednesday" including a keyword "day" and "New York station" including a keyword "station". The controller 110 may determine the keywords, and may determine at least one application program associated with the keywords. If audio dedicated communication or audiovisual communication is terminated, the controller 110 may control the display 130 to display a word including the keyword and application programs associated with the keyword in list or icon form. Fro example, as shown in FIG. 2B or FIG. 2C, the controller 110 may control the display unit 130 to display "Wednesday", "calendar", "memo pad", "New York station", "subway route", and "bus" in an icon or list form.

In some present exemplary embodiments, a keyword may be extracted from character information that has been converted from a sound signal and application programs associated with the keyword can be output to the display unit 130, which may display them in a list or icon form, however, the present invention is not limited thereto. For example, a word including a keyword may be extracted from the sound signal. Alternatively, for example, an entire sound signal input while performing communication may be converted to character information, the character information may be displayed in the display unit 130, and a user may select the keyword from the character information.

Further, in some present exemplary embodiments, a mapping table may be deployed in the mobile terminal 100, and application programs associated with keywords may be determined using the mapping table, however, the present invention is not limited thereto. For example, the mapping table may be stored in a server, and the mobile terminal 100 may transmit a previously stored sound signal to the server through an RF unit 150 and may receive a word including the keyword and an application program list associated with the keyword from the server.

In some present exemplary embodiments, by analyzing an input sound signal and providing a related application program that can be used by a user in a list or icon form, the mobile terminal 100 may remind the user of communication content and can guide the user to store important information, thereby improving user convenience.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

## Claims

1. A method for providing an application program of a mobile terminal, comprising:
receiving a sound signal (301);
determining whether at least one predetermined keyword exists in the sound signal;
determining, if at least one predetermined keyword exists in the sound signal, at least one application program mapped with the keyword (309); and
displaying, in response to detection of the sound signal that is terminated, a word corresponding to the keyword and at least one application program mapped with the keyword (313).

2. The method of claim 1, wherein displaying a word including the keyword and at least one application program mapped with the keyword (313) comprises:
displaying the word and the at least one application program mapped with the keyword in a list form; and
displaying the word and the at least one application program mapped with the keyword in an icon form.

3. The method of claim 2, wherein displaying a word including the keyword and at least one application program mapped with the keyword (313) comprises differently displaying, if a plurality of the words and the application programs mapped with the keyword exist, at least one of a character color and a background color of the icon form or a character color and a background color of the list form on a group basis.

4. The method of claim 1, further comprising
executing, if one of the word and the application program mapped with the keyword exists, in response to detection of the input of the sound signal that is terminated, the application program mapped with the keyword.

5. The method of claim 1, further comprising
determining, if a plurality of the keywords and at least one of the application program mapped with the keyword exist, whether one of the plurality of application programs mapped with the keyword is selected, and executing the selected application program (315, 317).

6. The method of claim 1, further comprising converting the sound signal to character information (303),
wherein determining whether at least one predetermined keyword exists in the sound signal comprises extracting at least one keyword from the character information (307).

7. The method of claim 6, wherein extracting at least one keyword from the character information comprises:
determining whether a predetermined keyword is included in the character information (307).

8. The method of claim 6, wherein extracting at least one keyword from the character information comprises:
displaying the entire character information; and
selecting the keyword among the displayed character information.

9. A mobile terminal comprising:
a controller 110 configured to extract, if a sound signal is detected as an input, a predetermined keyword from the sound signal and to determine at least one application program mapped with the keyword; and
a display unit 130 configured to display, if the input sound signal is terminated, a word corresponding to the keyword and at least one application program mapped with the keyword.

10. The mobile terminal of claim 8, further comprising a storage unit 120 configured to store a mapping table to perform mapping process and to store the keyword and at least one application program mapped with the keyword.

11. The mobile terminal of claim 8, wherein the display unit 130 configured to display the word and at least one application program mapped with the keyword in an icon form or a list form.

12. The mobile terminal of claim 10, wherein if a plurality of the words and the application programs mapped with the keyword exist, the display unit 130 differently displays at least one of a character color or at least one of a background color of the icon form or a character color or a background color of the list form on a group basis.

13. The mobile terminal of claim 8, wherein if one of the keyword and the application program mapped with the keyword exists, the controller 110 is configured to control to execute the application program mapped with the keyword when the input of the sound signal is terminated.

14. The mobile terminal of claim 8, wherein if a plurality of the keywords and the application programs mapped with the keyword exist, the controller 110 is configured to determine whether one of a plurality of application programs is selected and to execute the selected application program.
